# EUROPÄISCHE PATENTSCHRIFT

(11) **EP 0 690 032 B1**
(45) Veröffentlichungstag und Bekanntmachung des Hinweises auf die Patenterteilung: **14.01.1998**
(21) Anmeldenummer: 95108718.8
(22) Anmeldetag: 07.06.1995
(51) Int. Cl.: C03C 17/28, C03C 17/30

(54) **Überzugsmittel für Glasoberflächen**
Coating composition for glass surfaces
Composition pour le revêtement de surfaces en verre

(30) Priorität: 21.06.1994 DE 4421724
(43) Veröffentlichungstag der Anmeldung: 03.01.1996
(73) Patentinhaber: Th. Goldschmidt AG, 45127 Essen (DE)
(72) Erfinder: Eisen, Heinz-Günther, D-45307 Essen (DE); Grüning, Burghard, Dr., D-45134 Essen (DE); Vallerien, Sven-Uwe, Dr., D-45239 Essen (DE)

(56) Entgegenhaltungen:
- EP-A- 0 464 779
- GB-A- 1 253 464
- DATABASE WPI Section Ch, Week 7915 Derwent Publications Ltd., London, GB; Class L, AN 79-28428b & JP-A-54 028 320 (YAMAMURA GLASS KK) , 2.März 1979
- DATABASE WPI Section Ch, Week 7948 Derwent Publications Ltd., London, GB; Class L, AN 79-86988b & JP-A-54 137 020 (NEOS KK) , 14.April 1978

## Beschreibung

Die Erfindung betrifft Überzugsmittel zur Maskierung von Verschleißspuren, wie Kratzer, Riefen u.ä., auf Glasoberflächen, insbesondere auf Mehrwegbehälterglas.

Glasbehälter, die z.B. mit Getränken, wie Milch, Bier, Fruchtsaft, Mineralwasser oder Limonaden, gefüllt werden, sind zu einem großen Anteil Mehrwegartikel. Sie werden über ein Sammelsystem nach Gebrauch dem Abfüller zugeführt und erneut befüllt. Sowohl beim Transport als auch bei der Abfüllung erleiden die Flaschen Beschädigungen, die meist durch den Kontakt der Flaschen untereinander oder durch den Kontakt mit metallischen Oberflächen verursacht werden. Diese Verschleißspuren sollen abgedeckt werden; dazu müssen die folgenden Forderungen erfüllt werden:
- gute Abdeckung der verkratzten Stellen
- Wasserbeständigkeit bereits nach kurzer Dauer
- Anwendbarkeit auch auf feuchten Flaschen
- klebfreie Beschichtung mit angenehmem Griff
- keine Beeinflussung der Etiketten, Druckfarben und Etikettenleime
- vollständige Abwaschbarkeit der Filme und unkritisches Verhalten in der alkalischen Waschlauge
- toxikologische Unbedenklichkeit.

Die Filme müssen eine gute Abdeckung der Verschleißspuren ermöglichen bei gleichzeitiger Wasserbeständigkeit. Denn die Glasbehälter werden oftmals in Kühlschränken und -theken aufbewahrt, so daß eine Beständigkeit gegen Schwitzwasser gewährleistet sein muß. Der Filmauftrag muß auch auf feuchten und kalten Flaschen einwandfrei funktionieren. Der Film darf nicht klebrig sein, da dies von den Kunden nicht akzeptiert wird und er außerdem durch Staubanlagerungen verschmutzen würde. Eine thermische Aushärtung des Films ist aufgrund der hohen Abfüllgeschwindigkeiten nicht realisierbar, zudem ist damit eventuell eine Belastung des Füllgutes gegeben. Der Film soll in der alkalischen Waschlauge vollständig abgewaschen werden können.

Es wurden zwar Methoden zur Maskierung von Verschleißspuren vorgeschlagen, die sich nicht mittels alkalischer Waschlauge abwaschen lassen. Sie sind jedoch nicht vorteilhaft, da die Glasbehälter wiederholt gefüllt, transportiert, geleert, eingesammelt und gewaschen werden. Ein permanenter Film wird dabei selbst leicht beschädigt und zeigt dann seinerseits unerwünschte Verschleißspuren. Im Verlauf der Wäsche verschlechtert sich zudem die Qualität dieser Beschichtung, sie wird z. B. schließlich weißlich-opaque. Außerdem sind hierbei Filmschichten bis zu 50 µm erforderlich; dies ist aus Kostengründen für die Abdeckung der Verschleißspuren nicht akzeptabel.

In der Literatur ist bereits ein umfangreicher Stand der Technik beschrieben, der sich mit diesem Problem beschäftigt. In dem US-Patent 4,273,834 wird eine Formulierung beschrieben, die aus einem hochmolekularen Polysiloxanharz, mit Methyl-, Phenyl- und Alkoxygruppen an den Si-Atomen, gelöst in kohlenwasserstoffhaltigen Lösungsmitteln, wie Toluol oder Xylol, besteht. Dieses Verfahren kann aus hygienischen und toxikologischen Überlegungen nicht überzeugen.

Die Verwendung von niedermolekularen und damit in Ethanol löslichen Polyorganosiloxanen wird in dem US-Patent 3,574,673 beschrieben. Dabei wird die Adhäsion zur Glasoberfläche durch den Einbau von aminofunktionellen Gruppen verbessert. Der Nachteil dieses Verfahrens liegt jedoch in der Verwendung von brennbaren Lösungsmitteln. Durch die Verwendung der aminofunktionellen Gruppen zeigt sich bei Lagerung der so behandelten Flaschen eine deutliche Gelbfärbung der Beschichtung.

Die Verwendung von modifizierten Polyorganosiloxanen, die funktionelle Gruppen wie z. B. Amino-, Mercapto- und/oder Trialkoxysilylgruppen zur Verbesserung der Haftung auf der Glasoberfläche enthalten, beschreibt das US-Patent 4,228,054. Dabei wird das vernetzbare Polyorganosiloxan unter Verwendung eines Zinnkatalysators, der toxikologisch bedenklich ist, ausgehärtet.

In dem US-Patent 4,656,221 ist die Verwendung von Polysiloxanen in Kombination mit kationischen und nichtionischen Tensiden beschrieben.

Ein Verfahren auf der Basis von Polysiloxanen, die in flüchtigen Polysiloxanen als Lösungsmittel auf die Flaschenoberflächen aufgebracht werden können, ist in der EP-A-395 077 genannt.

In der EP-A-464 779 sind Emulsionen von Fettsäuren-isopropylestern, z. B. Isopropylmyristat, die unter Verwendung von nichtionischen Emulgatoren und zusätzlichen Paraffin- und Silikonölkomponenten hergestellt werden, beschrieben. Als optionale Silikonölkomponente wird dabei Dimethylsilikonöl eingesetzt.

Allen in diesem Stand der Technik beschriebenen Verfahren ist die Verwendung beträchtlicher Mengen an Polysiloxanen gemein. Diese Substanzen werden unter den Waschlaugenbedingungen jedoch bis zu den flüchtigen, ringförmigen Siloxanmonomeren D3, D4 und D5 abgebaut. In den Abfüllbetrieben und hier insbesondere bei den Bierbrauereien ist dieser Effekt unerwünscht, da er zu Schaumstabilitätsproblemen führen kann. Der Einsatz von Polysiloxanen ist deshalb in der praktischen Anwendung der Maskierungsmittel in den Abfüllbetrieben kritisch und deshalb gering zu halten oder zu vermeiden.

In der DE-C-33 41 121 sind Paraffinölemulsionen und Wachse beschrieben, wobei Fettsäureester als Emulgatoren verwendet werden. Um die Überzugseigenschaften und auch die Verarbeitbarkeit zu verbessern, werden Natriumpolyacrylat und Morpholinfettsäuresalz hinzugefügt. Paraffine zeigen jedoch als kurzkettige Öle eine nur geringe Wasserbeständigkeit und geben dem Film zudem ein klebriges Erscheinungsbild. Die langkettigen, höher schmelzenden Wachse hingegen decken nur unzureichend ab und verursachen in der Waschlauge durch die Ablösung von Filmpartikeln einen nicht erwünschten Schaum, der sich auf der Behälterglasoberfläche abscheidet und den Waschvorgang stört.

In JP-A-54028320, JP-A-54137020 und GB-A-1 253 464 werden Fettsäureester als Überzugsmittel für Behälterglas genannt. Wie bei den Paraffinen weisen diese Überzüge eine nur geringe Wasserbeständigkeit sowie ein klebriges Erscheinungsbild auf. Ferner stört ein fettiger, unregelmäßiger Glanz.

Die vorliegende Erfindung stellt nun ein Überzugsmaterial bereit, welches alle genannten Anforderungen erfüllt und die Nachteile der zum Stand der Technik erläuterten, bekannten Verfahren vermeidet.

Der Gegenstand der vorliegenden Erfindung ist somit ein Überzugsmittel für Glasoberflächen zum Auftrag auf die abgenutzten, mit Verschleißspuren versehenen Teile eines Hohlglasbehälters. Das Überzugsmittel kann des weiteren zur Erhöhung der Glätte und zum Abdecken von Verschleißspuren bei Flachglasprodukten eingesetzt werden.

Das erfindungsgemäße Überzugsmittel enthält als filmbildende Komponente Mono- oder Dicarbonsäureester mit insgesamt bis zu 40 Kohlenstoffatomen im Molekül. Bevorzugt sind hierzu Esteröle mit einer Gesamt-C-Zahl von 10 bis 32, insbesondere 12 bis 24, mit einem unterhalb der Verarbeitungstemperatur liegenden Schmelzpunkt.

Beispiele für die filmbildende Komponente sind Esteröle, wie z.B. Ethylhexylethylhexanoat, Isopropylmyristat, Butylstearat, Butyllaurat, Diethylhexyladipat oder Ethylhexylpalmitat.

Die Öle enthalten als weitere Komponente bis zu 10 %, bevorzugt bis zu 5 %, langkettig-alkylmodifizierte Siloxane der folgenden Formel: 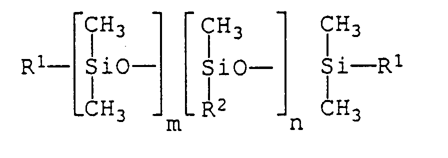
- wobei R¹ und R²: CH₃ oder ein C₈ bis C₂₄ - Alkylrest bedeuten und mindestens zwei Reste R¹ oder R² im Molekül der langkettige Alkylrest sind,
- und wobei m: 1 bis 200
- und n: 0 bis 50 sind.

Zur Dispergierung der filmbildenden Komponente werden an sich bekannte nichtionische Emulgatoren, wie Fettalkoholethoxylate, Sorbitanethoxylatfettsäureester, Polyglycerinfettsäureester, Methylglucosidfettsäureester, Methylglucosidethoxylatfettsäureester, Glycerinethoxylatfettsäureester, oder Alkylpolyglucoside (Cetearylalkohol und -glycoside) als selbstemulgierende O/W-Grundlage eingesetzt.

Zur Einstellung der gewünschten Verarbeitungskonsistenz können Verdickungsmittel, wie z.B. Polyacrylate oder Celluloseether (Hydropropylcellulose), zugesetzt werden.

Zur Verhinderung eines Befalls durch Mikroorganismen ist der Einsatz von Konservierungsmitteln, wie z.B. handelsüblichen Formaldehyddepotstoffen vorteilhaft.

Das erfindungsgemäße Überzugsmittel wird als wäßrige Emulsion angewendet, bevorzugt in folgender Zusammensetzung:
- a) 1 bis 40 Gew.-%: einer oder mehrerer der filmbildenden Komponenten der Ansprüche 1 bis 5
- b) 0,5 bis 12 Gew.-%: an nichtionischen Emulgatoren
- c) 0 bis 5 Gew.-%: Verdickungsmittel
- d) 0 bis 2 Gew.-%: Konservierungsmittel
- e) 41 bis 98,5 Gew.-%: Wasser.

Es kann in den Abfüllbetrieben unter Verwendung diverser Auftragsmethoden auf die Oberfläche der Hohlglasbehälter appliziert werden. So kann die erfindungsgemäße Formulierung mittels einer Sprühapparatur oder auch mit Hilfe eines Gewebes, eines Filzes oder eines Schwammes o.ä. in Form eines Films auf die Glasoberfläche aufgebracht werden.

Hierzu ist es vorteilhaft, daß die filmbildende Esteröl-Komponente in flüssiger Form vorliegt, um eine gleichmäßige Abdeckung der Verschleißspuren zu gewährleisten. Vorzugsweise wird man daher Esteröle verwenden, deren Schmelzpunkt unterhalb der Verarbeitungstemperatur liegt.

Die Temperatur der Glasoberfläche liegt dabei zwischen 0 °C und 50 °C.

Besonders vorteilhaft ist der Auftrag der erfindungsgemäßen Überzugsmittel auf die verschlissenen Hohlglasbehälter in den Abfüllbetrieben mittels Injekt-Sprühvorrichtungen, wie sie in Markierungssystemen für Verpackungen verwendet werden. Dabei ist die elektronische Steuerung dieser Systeme so zu modifizieren, daß die spezifischen Anforderungen für die Abdeckung der Verschleißzonen erfüllt werden, idealerweise erfolgt der Sprühauftrag dabei gezielt nur in die Sollreibzonen der Hohlglasbehälter.

Der Abdeckungseffekt zeigt sich sowohl auf Hohlglasbehältern, die beim Auftrag Raumtemperatur haben und trocken sind, als auch auf nassen und kalten Flaschen. Der Effekt ändert sich über einen Zeitraum von mehreren Wochen nicht, selbst bei Aufbewahrung in einem Kühlschrank oder einer Kühltheke. Das Etikettenmaterial, die Etikettenfarbe und auch der Etikettierleim werden nicht beeinträchtigt. Das Überzugsmaterial wird in der Flaschenwaschstufe rückstandsfrei entfernt und verursacht keine Probleme in der alkalischen Waschlauge.

Die erfindungsgemäßen filmbildenden Komponenten sind als Emollients in Kosmetikzubereitungen zugelassen und sind toxikologisch unbedenklich.

Zur Erläuterung der Erfindung sind nachfolgende Beispiele aufgeführt:

Die Komponenten wurden mit Wasser gemischt; unter Verwendung eines Homomixers wurden stabile Stammemulsionen mit einem Wirkstoffgehalt von 60 % hergestellt. In der Anwendung wurden diese Stammemulsionen dann auf einen Gehalt von 5 und 10 % verdünnt. Dieses Überzugsmaterial wurde dann auf verschlissene, mit Wasser gefüllte und mit Kronenkorken verschlossene Steinieflaschen, die zuvor mindestens für 12 h bei 2 Grad Celsius im Kühlschrank aufbewahrt worden waren, aufgesprüht. Dabei zeigten die Flaschen bereits eine deutliche Kondenswasserschicht. Das Überzugsmaterial wurde anhand seiner Abdeckeigenschaft bezüglich der Verschleißspuren, anhand seiner Wasserbeständigkeit nach dem Abspülen mit Wasser und des Anfühlens der Flaschen bewertet. Die Bewertung erfolgte mittels eines Systems von sechs Noten, wobei 1 für sehr gute und 6 für unzureichende Eigenschaften gewählt wurde. Es wurden aus statistischen Gründen jeweils sechs Flaschen bewertet.

**Tabelle**

| Wirksubstanz | Emulgierung | Abdeckung | Griff | Wasserbeständigkeit |
|---|---|---|---|---|
| Ethylhexylisononanoat | A | 4 | 2 | 2-3 |
| Ethylhexylethylhexanoat | B | 4 | 2 | 2-3 |
| Hexyllaurat | B | 3 | 2 | 2 |
| Isopropylstearat | A | 1 | 2 | 2 |
| Isopropylmyristat | A | 1 | 1-2 | 1-2 |
| Isocetylpalmitat | A | 1 | 2 | 2 |
| Butylstearat | C | 2 | 3 | 3 |
| Cetyloctanoat | A | 1-2 | 2 | 2-3 |
| Vergleich: Capryl/Capric Triglycerid | A | 4 | 3-4 | 2-3 |
| A = Ethoxiliertes Glycerinoleat (z.B. TAGAT® O, Th. Goldschmidt AG) B = wäßrige Dispersion von Alkylpolyglycosiden auf Basis von C₁₂/C₁₄-Alkoholen C = C₁₆/C₁₈-Glucosid / C₁₆/C₁₈-Alkohol | | | | |

## Patentansprüche

1. Überzugsmittel zum Abdecken von Verschleißspuren auf Glasoberflächen, dadurch gekennzeichnet, daß es als filmbildende Komponente Mono- oder Dicarbonsäureester mit insgesamt bis zu 40 Kohlenstoffatomen im Molekül und bis zu 10 Gew.-% langkettig-alkylmodifizierte Siloxane der Formel 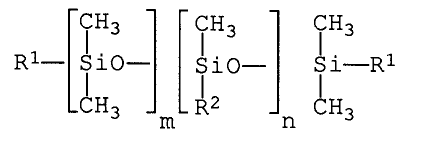
wobei R¹ und R² CH₃ oder ein C₈ bis C₂₄-Alkylrest bedeuten und mindestens zwei Reste R¹ oder R² im Molekül der langkettige Alkylrest sind,
und wobei m 1 bis 200
und n 0 bis 50 sind,
enthält.

2. Überzugsmittel nach Anspruch 1, dadurch gekennzeichnet, daß die filmbildende Komponente ein Esteröl mit einer Gesamt-C-Zahl von 10 bis 32 , insbesondere 12 bis 24, mit einem unterhalb der Verarbeitungstemperatur liegenden Schmelzpunkt ist.

3. Überzugsmittel nach Anspruch 1 oder 2, dadurch gekennzeichnet, daß der Carbonsäurerest der filmbildenden Komponente 3 bis 28 C-Atome und der Alkohol-Rest 4 bis 24 C-Atome aufweisen.

4. Überzugsmittel nach den Ansprüchen 1 bis 3, dadurch gekennzeichnet, daß die filmbildende Komponente Isopropylmyristat ist.

5. Überzugsmittel in Form einer wäßrigen Emulsion, bestehend aus
a) 1 bis 40 Gew.-% einer oder mehrerer der filmbildenden Komponenten der Ansprüche 1 bis 4
b) 0,5 bis 12 Gew.-% an nichtionischen Emulgatoren
c) 0 bis 5 Gew.-% Verdickungsmittel
d) 0 bis 2 Gew.-% Konservierungsmittel
e) 41 bis 98,5 Gew.-% Wasser.

6. Verfahren zum Abdecken von Verschleißspuren auf Glasoberflächen, dadurch gekennzeichnet, daß man die Überzugsmittel gemäß den Ansprüchen 1 bis 5 bei Temperaturen von 0 bis 50 °C auf die Glasoberfläche, insbesondere die äußere Oberfläche von Mehrweg-Hohlglasbehältern, aufbringt.

## Claims

1. Coating composition for covering traces of wear on glass surfaces, characterized in that it comprises as film-forming component mono- or dicarboxylic esters having a total of up to 40 carbon atoms in the molecule and up to 10 % by weight of siloxanes, modified with long-chain alkyl, of the formula 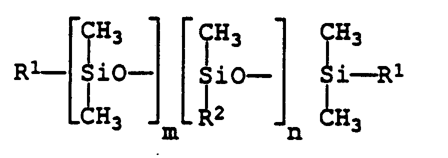
where R¹ and R² are CH₃ or a C₈ to C₂₄ alkyl radical and at least two radicals R¹ or R² in the molecule are the long-chain alkyl radical,
and where m is from 1 to 200
and n is from 0 to 50.

2. Coating composition according to Claim 1, characterized in that the film-forming component is an ester oil having a total C number of from 10 to 32, in particular from 12 to 24, with a melting point which is below the processing temperature.

3. Coating composition according to Claim 1 or 2, characterized in that the carboxylic acid radical of the film-forming component has 3 to 28 C atoms and the alcohol radical has 4 to 24 C atoms.

4. Coating composition according to Claims 1 to 3, characterized in that the film-forming component is isopropyl myristate.

5. Coating composition in the form of an aqueous emulsion, consisting of
a) from 1 to 40 % by weight of one or more of the film-forming components of Claims 1 to 4
b) from 0.5 to 12 % by weight of nonionic emulsifiers
c) from 0 to 5 % by weight of thickener(s)
d) from 0 to 2 % by weight of preservative(s)
e) from 41 to 98.5 % by weight of water.

6. Method of covering traces of wear on glass surfaces, characterized in that the coating compositions according to Claims 1 to 5 are applied at temperatures from 0 to 50°C to the glass surface, in particular the outer surface of hollow reuseable glass containers.

## Revendications

1. Composition de revêtement pour le recouvrement des traces d'usure sur des surfaces en verre, caractérisée en ce qu'elle contient comme composant filmogène, un ester d'acide mono- ou dicarboxylique, avec au total jusque 40 atomes de carbone dans la molécule, et jusque 10% en poids de siloxanes modifiés par des alcoyles à longue chaîne, de formule : 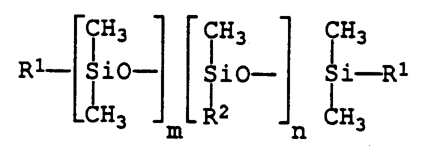 dans laquelle :
R¹ et R² représentent CH₃ ou un radical alcoyle en C₈₋₂₄, et au moins deux radicaux R¹ ou R² dans la molécule sont un radical alcoyle à longue chaîne;
m est 1 à 200, et
n est 0 à 50.

2. Composition de revêtement suivant la revendication 1, caractérisée en ce que le composant filmogène est une huile-ester avec un indice C total de 10 à 32, particulièrement de 12 à 24, avec un point de fusion inférieur à la température de la mise en oeuvre.

3. Composition de revêtement suivant la revendication 1 ou 2, caractérisée en ce que le radical acide carboxylique du composant filmogène présente 3 à 28 atomes C et le radical alcool 4 à 24 atomes C.

4. Composition de revêtement suivant les revendications 1 à 3, caractérisée en ce que le composant filmogène est le myristate d'isopropyle.

5. Composition de revêtement sous la forme d'une émulsion aqueuse, composée de
a) 1 à 40% en poids d'un ou plusieurs des composants filmogènes des revendications 1 à 4;
b) 0,5 à 12% en poids d'émulsifiants non ioniques;
c) 0 à 5% en poids d'épaississant;
d) 0 à 2% en poids d'agent conservateur, et
e) 41 à 98,5% en poids d'eau.

6. Procédé de recouvrement des traces d'usure sur des surfaces en verre, caractérisé en ce que l'on applique la composition de revêtement suivant les revendications 1 à 5, à des températures de 0 à 50°C, sur la surface en verre, en particulier la surface extérieure de récipients en verre creux recyclables.
